# EUROPEAN PATENT SPECIFICATION

(11) **EP 1 188 396 B1**
(45) Date of publication and mention of the grant of the patent: **26.05.2004**
(21) Application number: 01307468.7
(22) Date of filing: 03.09.2001
(51) Int. Cl.: A47B 43/04, E06B 5/00

(54) **Combined storage and decorative unit**
Kombination einer Lagervorrichtung mit einem Zierelement
Elément pour rangement et décoration combinés

(30) Priority: 14.09.2000 GB 0022540
(43) Date of publication of application: 20.03.2002
(73) Proprietor: Peppett, Robert Anthony, Wimbledon, London SW19 1LH (GB)
(72) Inventor: Peppett, Robert Anthony, Wimbledon, London SW19 1LH (GB)
(74) Representative: Burrington, Alan Graham Headford

(56) References cited:
- DE-U- 9 315 458
- NL-C- 1 005 754
- US-A- 3 115 719
- US-A- 3 709 578
- US-A- 4 574 506

## Description

### Background of the Invention

The present invention relates to a combined storage and decorative unit.

A number of proposals have been made in the past for providing various types of storage unit which are also decorative. For example, it has been known for many years to provide the lid of a storage unit, such as a box or trunk with decoration of one sort or another, such as a graphical design or carving.

It is also known to have wall mounted storage units such as cupboards for various uses, eg kitchen cupboards and bathroom cabinets.

Whilst such known types of storage unit are perfectly adequate and satisfactory in many domestic and even office environments they can prove to be too bulky, heavy and expensive.

US Patent No. 3,709,578 discloses a storage cupboard comprising: a container; mounting feet adapted to be bolted to a wall; a pair of hinged doors, so that in their closed position the doors conceal the container when the container is wall mounted, and allow access to the interior of the container when open.

The present invention is concerned with providing a product which will be particularly useful where floor and wall space is at a premium, where the product must not be too bulky and where the product must be of relatively low cost.

According to the present invention there is provided a decorative storage unit comprising: a container having means whereby it can be mounted on a wall; a door hinged to the container so that in its closed position the door conceals the container when the container is wall mounted and in its open position allows access to the interior of the container; characterised in that:
the door comprises a flexible lamina member held in tension on a surrounding frame; and the container comprises a hollow framework.

Preferably, the storage unit specified in the immediately preceding paragraph has one or more of the following further features:
i. the door comprises a flexible lamina member held in tension on a surrounding frame with the construction as claimed in our co-pending British patent application 99 27 027; and/or
ii. the storage unit comprises a hollow framework of wire; and/or
iii. the door comprises a translucent panel; and/or
iv. the storage unit houses means for illuminating the interior of the storage unit and the rear surface of the door when the latter is in its closed position; and/or
v. the outer surface of the door is provided with means whereby one of a number of different graphic displays or pictures carried on their own lamina surface may be removably mounted on the outer surface of the door.

The illuminating means or lamp referred to in iv. can also act as a wall light where the container is an open framework and not solid.

How the invention may be carried out will now be described by way of example only and with reference to the accompanying drawings, in which:
*Figure 1* is a perspective view of a decorative storage unit constructed according to the present invention with the door closed;

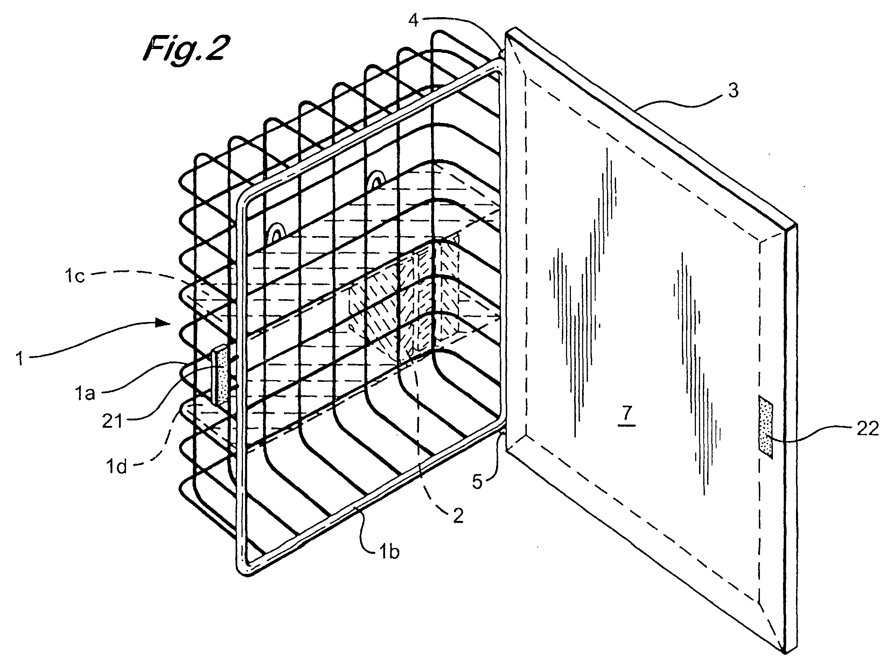

*Figure 2* is a view similar to *Figure 1* showing the unit with the door open;
*Figure 3* is a front elevational view, partly cut-away, showing the construction of the door shown in *Figures 1* and *2*;
*Figure 4* is a perspective enlarged fragmentary view of one of the four adjustable corner joints of the door of *Figure 3*;
*Figure 5* is a front elevational sectional fragmentary view of the corner joint of *Figure 4*;
*Figure 6* is an enlarged fragmentary view illustrating the detail of the hinge construction by which the door of the unit is hinged to the wire framework container;
*Figure 7* is a plan view of *Figure 6*; and

### Figures 1 and 2

The decorative storage unit according to the present invention comprises a hollow wire framework construction container **1** which has a base **1a** and a front frame **1b**. This basic structure may be provided with a variety of different internal support members, such as shelves, designed to suit the storage of differing items within the container.

In this embodiment, these internal support members comprise two wire shelf members **1c** and **1d** on which a number of items, such as video cassettes 2, may be supported within the container 1.

The open front of the container 1 is closeable by means of a door **3** which is hinged to the front frame **1b** at **4** and **5**. A catch arrangement is provided to hold the door in its closed position. In this embodiment it comprises two patches of Velcro (Registered Trademark) **21, 22** mounted on the frame **1b** and door respectively.

### Figures 3 to 5

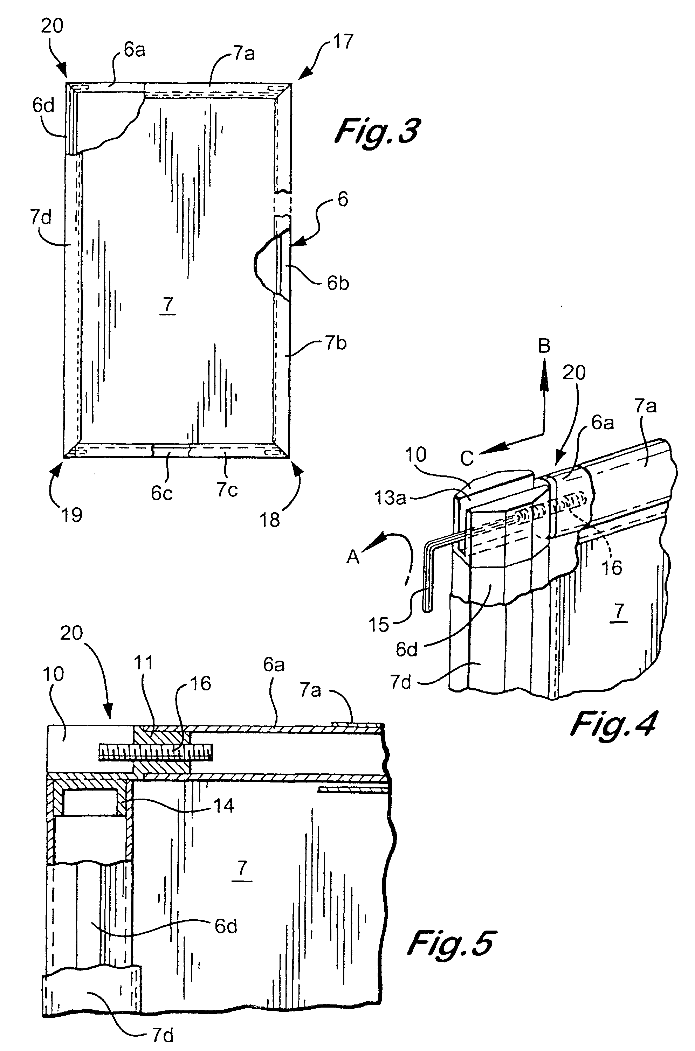

The door **3** has substantially the same construction as that disclosed in our co-pending British patent application 99 27 027, but its construction will now be described in relation to *Figures 3* to *5*.

Essentially the door **3** comprises a metal frame **6** which supports a flexible lamina panel **7** in tension. The panel **7** is typically made from a woven material and is translucent.

More particularly, the frame **6** is made up of basically four aluminium members **6a, 6b, 6c** and **6d** which are adjustably interconnected to each other at the corners of the frame.

The rectangular flexible lamina of fabric **7**, is mounted between the two longitudinal frame members **6b, 6d** which are contained in pockets **7b**, **7d** formed in the longitudinal sides of the fabric.

The shorter transverse ends of the fabric lamina panel **7** have pockets **7a, 7c** formed in them which on the transverse frame members **6a, 6c** respectively.

The ends of the longitudinal frame members **6b, 6d** and transverse frame members 6a, 6c have adjustable corner connections **17, 18**, **19** and **20** by which those ends can be connected to one another and also by which the tension in the fabric lamina panel **7** may be adjusted.

The corner connections are adjustable to in effect increase or decrease the overall peripheral length of the frame and to thereby adjust the tension of the flexible lamina panel **7**.

These adjustable corner connections are shown in more detail in *Figures 4* and *5* and are substantially the same as the arrangements disclosed in our above mentioned earlier patent application and described in relation to *Figures 4* and *6* of that patent application.

Each of the four adjustable comer arrangements comprises a cam member **10,** which fits into the open tubular end of a longitudinal frame member **6d,** and an end cap **11** which fits in the end of an adjacent tubular transverse frame member **6a**.

The cam member 10 consists essentially of an inclined cam surface **13,** which is integral with a spigot member **14,** the latter being a force-fit into the end of the tubular longitudinal frame member **6d.**

The cam surface **13** is provided with a slot **13a** through which an Allen key **15** may be inserted to engage the end of a captive screw **16** which is threaded into the end cap **11**.

The captive screw **16** is normally inserted fully within the member **11** so that the left-hand end of the screw, as viewed in *Figure 5*, is flush with the left-hand end of the member **11**.

After the frame members have been located in the respective pockets **7, 7a, 7b, 7c** and **7d**, the end of the screw member **16** is engaged by the Allen key **15** and rotated, as indicated by the arrow A in *Figure 4*, so as to make it progressively emerge from the member **11** and contact the cam surface **13**, as shown in *Figure 5*.

As the screw **16** is progressively drawn out of the member **11**, the left-hand side of the screw **16** will ride up the cam surface **13** which will have the effect of moving the transverse frame member **6a** in the direction of the arrow 'B' and the frame member **6b** in the direction of the arrow 'C' to thus tension the flexible material **7** forming the door.

By adjusting each of the screws **16** associated with each of the four corner arrangements **17, 18, 19** and **20** of the frame, the overall tensioning of the material flexible lamina **7**, can be effected.

The lamina panel **7** has applied to its front surface a graphic design or picture **9**.

### Figures 6 and 7

In addition to the adjustable corner connections previously described, the adjustable frame **6** is provided with two hinge arrangements **4** and **5** as previously mentioned, these being shown in more detail in *Figures 6* and *7*.

Each of the hinges **4** and **5** comprises a male member **4a, 5a** and a female member **4b, 5b** respectively.

The female members **4b, 5b** consist of internally threaded tubes welded to the metal front frame **1b** of the wire container **1**.

The front surface of the flexible lamina panel **7** is provided with a graphic design or picture **9** which can be applied to the panel in a number of ways.

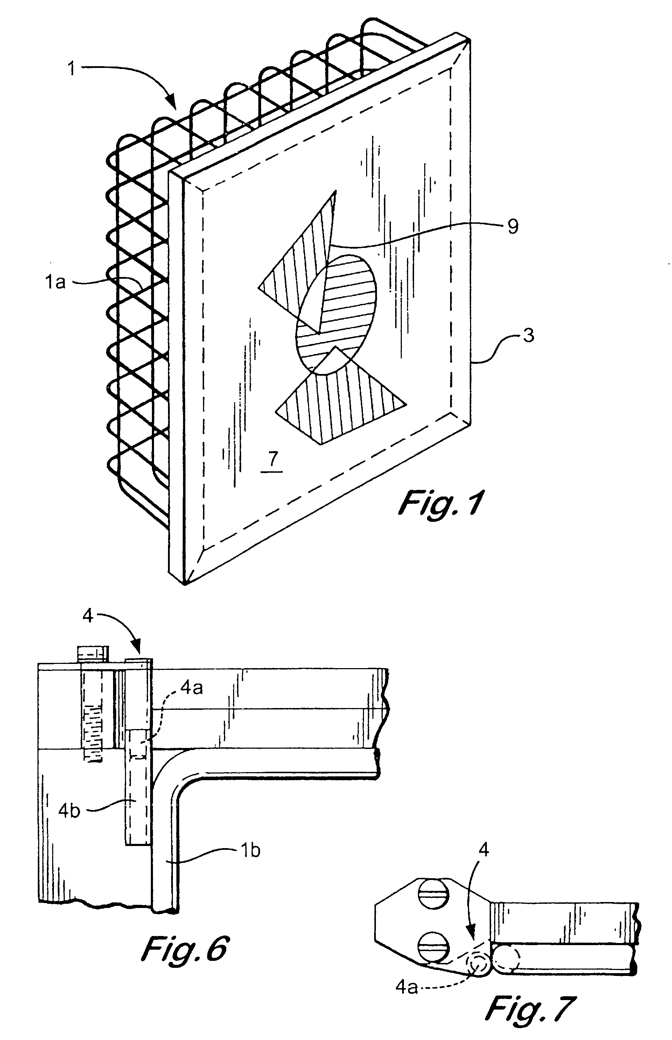

The preferred way of applying the graphic design or picture **9** is by screen printing, but it could be hand painted. In the latter case the unit shown in *Figure 1*, when sold, could have sold with it a painting kit. This kit could comprise a number of designs (eg in the form of stencils or transfers) and the necessary colouring materials such as paints, so that the purchaser can select and execute the graphic design or picture of the purchaser's choice.

The graphic design or picture can also be applied to the front surface of the lamina panel **7** in other ways. For example, the adjustable frame **6** could be provided with means whereby pre-printed graphic designs or pictures (typically a poster) could be detachably secured to the front surface of the panel 7.

The unit of the present invention could be sold to the end user ready assembled, or as a kit for self assembly. In the former case, the door **3** would already have been assembled, ie the assembly steps described and illustrated with reference to *Figures 3* to *5* would have been carried out by the supplier.

Preferably, and as illustrated in *Figure 1*, the lamina panel **7** which acts as a hinged door to the wire container **1** is of substantially larger area than the front opening of the wire container so that when the panel is hinged closed it will conceal the wire container not only when the unit as a whole is viewed centrally or at right angles to the wall on which the unit is mounted but also when viewed obliquely.

Although the invention has been described with reference to the embodiment shown in the drawings in which the container **1** and the hinged door lamina panel **7** are rectangular, both the container and the hinged panel could be other shapes, the key feature being that when the panel is hinged closed it substantially conceals the container which is between it and the mounting wall.

A key feature of the unit of the present invention is that it is of lightweight construction. This is achieved by (a) having the storage part of the unit constructed from relatively thin, but strong metal wires thus making it light in weight and (b) by having the hinged door to the unit comprising a relatively light frame on which is mounted a tensioned flexible lamina panel which again is light in weight.

The unit described with reference to the accompanying drawings is particularly useful in rooms (both domestic and commercial/office) which are small and therefore offer extremely limited capacity for housing storage units.

## Claims

1. A decorative storage unit comprising:
a container (**1**) having means whereby it can be mounted on a wall;
a door (**3**) hinged to the container (**1**) so that in its closed position the door (**3**) conceals the container (**1**) when the container is wall mounted and in its open position allows access to the interior of the container (**1**);
**characterised in that**:
the door (**3**) comprises a flexible lamina member (**7**) held in tension on a surrounding frame (**6**); and
the container comprises a hollow framework.

2. A unit as claimed in claim **1**, in which the flexible lamina member (**7**) is made from a woven material.

3. A unit as claimed in claims **1** or **2**, in which the flexible lamina member (**7**) has pockets (**7b,7d**) which contain longitudinal frame members (**6b,6d**) of said frame (**6**).

4. A unit as claimed in claim **3**, in which the framework is made of wire.

5. A unit as claimed in any previous claim in which the door is made of translucent material.

6. A unit as claimed in any previous claim in which the container houses means for illuminating the interior of the storage unit and the rear surface of the door when closed.

7. A unit as claimed in any previous claim having internal support members **(1c,1d)** to support items stored within said unit.

8. A unit as claimed in claim **7**, wherein said internal support members **(1c,1d)** comprise of wire shelf members.

## Patentansprüche

1. Dekorativer Einrichtungsgegenstand, insbesondere zur Aufbewahrung von Objekten des täglichen Bedarfs, bestehend aus:
Behälter (1) mit Haltevorrichtung zur Wandmontage;
Tür (3), mit Scharnieren an dem Behälter (1) befestigt, so dass die Tür (3) in geschlossener Stellung den Behälter (1) bei Wandmontage verdeckt und in geöffneter Stellung Zugang zum Inneren des Behälters (1) gewährt;
näher bezeichnet wie folgt:
die Tür (3) besteht aus einem elastischen dünnen Blatt (7), das auf einen Rahmen (6) aufgespannt ist; und
der Behälter ist als hohle Gitterkonstruktion ausgeführt.

2. Einrichtungsgegenstand nach Anspruch 1, bei dem das elastische dünne Blatt (7) aus einem gewobenen Material hergestellt ist

3. Einrichtungsgegenstand nach Ansprüchen 1 oder 2, bei dem das elastische dünne Blatt (7) über Taschen (7b, 7d) verfügt, welche die Längsstreben (6b, 6d) des bezeichneten Rahmens (6) aufnehmen.

4. Einrichtungsgegenstand nach Anspruch 3, bei dem die Gitterkonstruktion aus Draht besteht.

5. Einrichtungsgegenstand nach einem beliebigen der vorangehenden Ansprüche, bei welchem die Tür aus transluzentem Material besteht.

6. Einrichtungsgegenstand nach einem beliebigen der vorangehenden Ansprüche, bei welchem der Behälter eine Beleuchtungsvorrichtung beherbergt, die zur Beleuchtung des Innenraums des Einrichtungsgegenstandes sowie, bei geschlossener Tür, zur Beleuchtung der rückwärtigen Seite der Tür dient.

7. Einrichtungsgegenstand nach einem beliebigen der vorangehenden Ansprüche mit internen Haltevorrichtungen (1c, 1d) zur Ablage der in dem Einrichtungsgegenstand aufbewahrten Objekte.

8. Einrichtungsgegenstand nach Anspruch 7, in welchem die bezeichneten internen Haltevorrichtungen (1c, 1d) als Drahtgitter-Regalelemente ausgeführt sind.

## Revendications

1. Une unité de rangement décorative comprenant :
un contenant (1) ayant un moyen par lequel il peut être monté sur un mur ;
une porte (3) articulée au contenant (1) de sorte qu'à sa position fermée, la porte (3) dissimule le contenant (1) quand le contenant est monté au mur et à sa position ouverte permet l'accès à l'intérieur du contenant (1) ; **caractérisée en ce que** :
la porte (3) comprend un élément laminé souple (7) maintenu en tension sur un cadre périphérique (6) ; et
le contenant comprend une ossature creuse.

2. Une unité selon la revendication 1, dans laquelle l'élément laminé souple (7) est fait en matériau tissé.

3. Une unité selon la revendication 1 ou 2, dans laquelle l'élément laminé souple (7) a des poches (7b, 7d) qui contiennent les éléments de cadre longitudinaux (6b, 6d) dudit cadre (6).

4. Une unité selon la revendication 3, dans laquelle l'ossature est faite en fil métallique.

5. Une unité selon l'une quelconque des revendications précédentes, dans laquelle la porte est faite en matériau translucide.

6. Une unité selon l'une quelconque des revendications précédentes, dans laquelle le contenant abrite un moyen d'illuminer l'intérieur de l'unité de rangement et la surface arrière de la porte quand celle-ci est fermée.

7. Une unité selon l'une quelconque des revendications précédentes ayant des éléments de support intérieurs (1c, 1d) pour supporter les articles stockés dans ladite unité.

8. Une unité selon la revendication 7, où lesdits éléments de support intérieurs (1c, 1d) sont composés d'éléments d'étagères en fil métallique.
